# EUROPÄISCHE PATENTSCHRIFT

(11) **EP 0 769 616 B1**
(45) Veröffentlichungstag und Bekanntmachung des Hinweises auf die Patenterteilung: **08.11.2000**
(21) Anmeldenummer: 96112692.7
(22) Anmeldetag: 07.08.1996
(51) Int. Cl.: F02F 11/00, F16J 15/08

(54) **Dichtungssystem für Brennkraftmaschinen**
Sealing system for internal combustion engines
Système d'étanchéité pour moteurs à combustion interne

(30) Priorität: 21.10.1995 DE 19539245
(43) Veröffentlichungstag der Anmeldung: 23.04.1997
(73) Patentinhaber: Federal-Mogul Sealing Systems GmbH, 57562 Herdorf (DE)
(72) Erfinder: Lönne, Klaus, Dipl.-Ing., 51399 Burscheid (DE); Heilig, Markus, Dipl.-Ing., 57520 Derschen (DE); Albertz, Karl-Heinz, Dipl.-Ing., 51381 Leverkusen (DE)

(56) Entgegenhaltungen:
- EP-A- 0 306 766
- AT-B- 393 408
- GB-A- 979 408
- PATENT ABSTRACTS OF JAPAN vol. 14, no. 60 (M-931) [4003] , 5.Februar 1990 & JP-A-01 285645 (NIPPON GASKET), 16.November 1989,
- PATENT ABSTRACTS OF JAPAN vol. 95, no. 010 & JP-A-07 260004 (NIPPON GASKET CO LTD;OTHERS: 01), 13.Oktober 1995,
- MTZ MOTORTECHNISCHE ZEITSCHRIFT, Bd. 55, Nr. 1, 1.Januar 1994, Seiten 62-67, XP000423098 GROSCH P ET AL: "NEUE MEHRLAGEN-METALL-ZYLINDERKOPFDICHTUNGEN"

## Beschreibung

Die Erfindung betrifft eine Brennkraftmaschine mit einem Spalt zwischen Zylinderkopf und Zylinderblock und einer metallischen Flachdichtung, die den Spalt abdichtet, sowie mit einer in den Spalt ragenden, einen Überstand zum Zylinderblock aufweisenden Stirnfläche einer Zylinderlaufbuchse.

Die Abdichtung des Spaltes zwischen Zylinderkopf und Zylinderblock einer Brennkraftmaschine erfolgt vielfach durch ein- oder mehrlagige metallische Flachdichtungen. Die Dichtungen bestehen aus Stahlblechen mit Sicken, welche die Brennraumöffnungen umgeben. Um eine dauerhafte Elastizität der Sicken sicherzustellen dürfen diese weder im Einbauzustand noch im Motorbetrieb völlig plattgedrückt werden. Erreicht wird dies durch eine umgefalzte Lage oder einen Stopperring im Bereich der Brennraumöffnung. Aus der DE 42 197 09 A1 sind metallische Flachdichtungen bekannt, bei denen verschiedene Maßnahmen durchgeführt wurden, um einen Stopper zu bilden, der zur Abstützung der Sicken dient. Diese Konstruktionen können bei PKW-Motoren eingesetzt werden, die eine ebene Oberfläche von Zylinderkopf und Zylinderblock aufweisen.

Es hat sich gezeigt, daß bei Motoren mit nassen oder trockenen Zylinderlaufbuchsen, die einen Überstand gegenüber der Zylinderblockfläche aufweisen, derartige Dichtungen nicht ausreichende Dichtungseigenschaften besitzen. Gemäß US 5 240 262 wurde bereits vorgeschlagen, bei Motoren mit Zylinderlaufbuchsenüberständen im Bereich des Zylinderblockes eine Stopperlage anzuordnen, um so den Buchsenüberstand auszugleichen.

Bei Weichstoffdichtungen gemäß GB-A-979408 wurden im Bereich der Zylinderlaufbuchse elastische Einlegeringe vorgesehen, um so einen höheren Verspannungszustand zu erzeugen. Maßnahmen, die darauf abzeilen, den Einlegering gegen Verformung zu schützen, können diesem Stand der Technik nicht entnommen werden.

Der Erfindung liegt die Aufgabe zugrunde ein Dichtungssystem zu schaffen, welches den Überstand der Zylinderlaufbuchse als Stopper der Sicken ausnutzt.

Diese Aufgabe wird erfindungsgemäß durch die kennzeichnenden Merkmale des Anspruchs 1 gelöst. Vorteilhafte Ausgestaltungen der Erfindung sind in den Unteransprüchen beschrieben.

Durch die Einbeziehung der Zylinderlaufbuchse in die konstruktive Ausgestaltung der metallischen Flachdichtung kann bei der Flachdichtung auf eine separate Stopperlage verzichtet werden. Hierdurch ergibt sich eine Ersparnis bei der Herstellung.

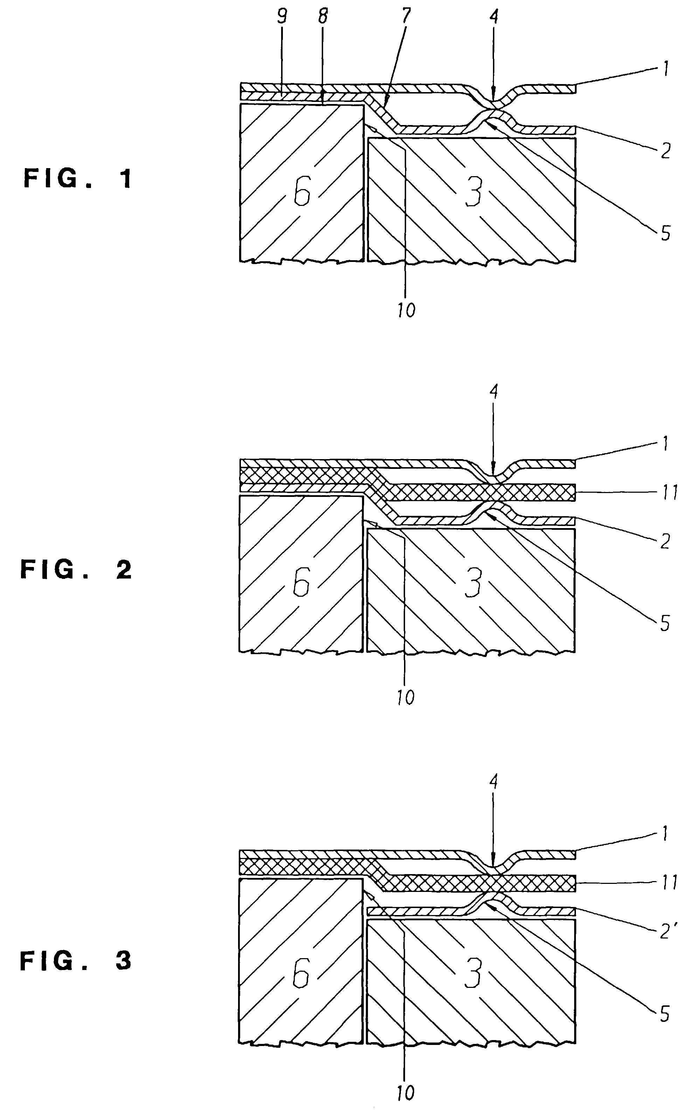

Nachfolgend wird die Erfindung anhand von in der Zeichnung dargestellten Ausführungsbeispielen weiter beschrieben. Die Figuren 1 bis 5 zeigen anhand jeweils eines Beispieles schematisch einen Querschnitt durch den Rand einer Brennraumöffnung einer Brennkraftmaschine mit Zylinderlaufbuchsen. Die in der Figur 1 dargestellte Dichtung besteht aus einer metallischen Flachdichtung mit zwei gesickten Dichtungslagen (1, 2) und symmetrisch angeordneten Sicken (4, 5). Die mit dem Zylinderblock (3) korrespondierende Dichtungslage (2) weist einen Umfangsabschnitt (9) mit einer Kröpfung (7) auf. Die Kröpfung (7) entspricht der Höhe des Überstandes (10) der Zylinderlaufbuchse (6). Dadurch, daß die Stirnfläche (8) der Zylinderlaufbuchse (6) mit dem Umfangsabschnitt (9) korrespondiert, werden die Sicken (4, 5) axial abgestützt.

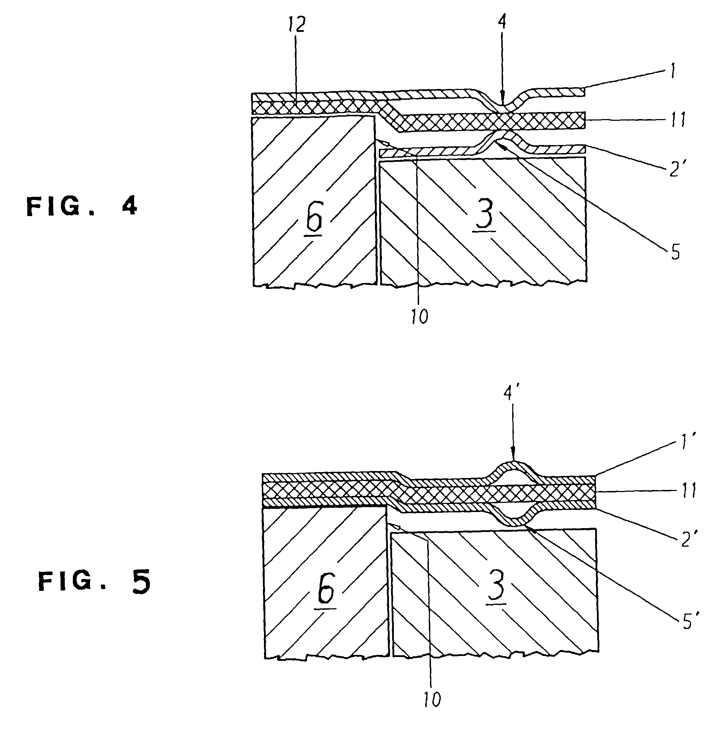

Je nach Anwendungsfall kann es nötig sein, zwischen der ersten und zweiten Dichtungslage (1, 2) eine Distanzlage (11) anzuordnen. Je nach Maß des Überstandes (10) der Zylinderlaufbuchse (6) kann die Distanzlage (11) ebenfalls mit einer Kröpfung versehen werden. In der Ausführung, gemäß Figur 2, erstreckt sich die Distanzlage (11) ebenfalls bis auf die Zylinderlaufbuchse (6) und weist eine Kröpfung auf, die etwa dem Maß des halben Überstandes (10) der Zylinderlaufbuchse (6) entspricht. Sehr hohe Überstände können dadurch kompensiert werden, daß analog Figur 3 die Dichtungslage (2') sich bis zum Außenumfang des Überstandes (10) erstreckt und nur die Distanzlage (11) auf der Zylinderlaufbuchse (6) aufliegt. Darüber hinaus besteht die Möglichkeit, gemäß Figur 4 den auf der Zylinderlaufbuchse (6) aufliegenden Bereich (12) der Distanzlage (11) zu prägen, um so eine definierte axiale Dicke zu erzeugen.

Denkbar wäre es auch, die Sicken (4', 5') mit der konvexen Seite zum Zylinderblock (3) und Zylinderkopf (nicht dargestellt) auszubilden, gemäß Figur 5.

## Patentansprüche

1. Brennkraftmaschine mit einem Spalt zwischen Zylinderkopf und Zylinderblock (3) und einer metallischen Flachdichtung, die den Spalt abdichtet sowie mit einer in den Spalt ragenden, einen Überstand (10) zum Zylinderblock aufweisenden Stirnfläche (8) einer Zylinderlaufbuchse (6), dadurch gekennzeichnet, daß die Flachdichtung zwei Dichtungslagen (1,2,1'2') mit die Öffnung der Zylinderlaufbuchse (6) umschließenden Sicken ( 4, 4', 5, 5') aufweist, welche radial außerhalb der Zylinderlaufbuchse (6) verlaufen und über die als Stopper für die Sicken wirkende axiale Höhe des Überstandes (10) der Zylinderlaufbuchse (6) abgestützt sind und wobei sich mindestens eine der beiden Dichtungslagen (1,2,1',2') der Flachdichtung auf der den Überstand zum Zylinderblock aufweisenden Stirnfläche der Zylinderlaufbuchse bis zu dessen Innendurchmesser erstreckt, so daß im Einbauzustand im Bereich der Stirnfläche der Zylinderlaufbuchse ein gegenüber dem übrigen Bereich der Flachdichtung erhöhter Verspannungszustand erzeugt ist.

2. Brennkraftmaschine nach Anspruch 1, dadurch gekennzeichnet, daß die axiale Höhe des Überstandes (10) der Zylinderlaufbuchse (6) im Bereich von 50 bis 250 um liegt.

3. Brennkraftmaschine nach Anspruch 1 und 2, dadurch gekennzeichnet, daß die Sicken symmetrisch angeordnet sind und eine der Dichtungslagen (2) mit dem Zylinderblock (3) korrespondiert und einen Umfangsabschnitt (9) aufweist der entsprechend der Höhe des Überstandes (10) der Zylinderlaufbuchse (6) gekröpft ist und mit der Stirnfläche (8) korrespondiert.

4. Brennkraftmaschine nach Anspruch 3, dadurch gekennzeichnet, daß zwischen den Dichtungslagen (1, 1', 2, 2') eine Distanzlage (11) angeordnet ist.

5. Brennkraftmaschine nach Anspruch 4 , dadurch gekennzeichnet, daß die Distanzlage (11) sich bis zur Öffnung der Zylinderlaufbuchse (6) erstreckt.

6. Brennkraftmaschine nach mindestens einem der Ansprüche 4 und 5, dadurch gekennzeichnet, daß der bis zur Öffnung der Zylinderlaufbuchse (6) sich erstreckende Endbereich der Distanzlage (11) eine Kröpfung aufweist.

## Claims

1. An internal combustion engine with a gap between the cylinder head and the cylinder block (3) and metal gasket which seals the gap, and with an end surface (8) of a cylinder liner (6) having an excess length (10) relative to the cylinder block projecting into the gap, characterized in that the gasket comprises two sealing layers (1, 2, 1', 2') with beads (4, 4', 5, 5') surrounding the opening of the cylinder liner (6) and which lie radially outside the cylinder liner (6) and are supported by the axial height of the excess length (10) of the cylinder liner (6) acting as a stopper for the beads, and wherein at least one of the two sealing layers (1, 2, 1', 2') of the gasket extends over the end surface of the cylinder liner having the excess length relative to the cylinder block as far as the inner diameter of the liner, so that an enhanced clamping state is created in the installed situation in the region of the end surface of the cylinder liner compared with the rest of the gasket.

2. An internal combustion engine according to claim 1, characterized in that the axial height of the excess length (10) of the cylinder liner (6) lies in the region of 50 to 250 µm.

3. An internal combustion engine according to claim 1 or 2, characterized in that the beads are disposed symmetrically and one of the sealing layers (2) corresponds to the cylinder block (3) and has a peripheral section (9) which is offset in correspondence with the height of the excess length (10) of the cylinder liner (6) and corresponds to the end surface (8).

4. An internal combustion engine according to claim 3, characterized in that a spacer layer (11) is disposed between the sealing layers (1, 1', 2, 2').

5. An internal combustion engine according to claim 4, characterized in that the spacer layer (11) extends up to the opening of the cylinder liner (6).

6. An internal combustion engine according to at least one of claims 4 and 5, characterized in that the end region of the spacer layer (11) extending up to the opening of the cylinder liner (6) has an offset.

## Revendications

1. Moteur à combustion interne avec une fente entre la culasse de cylindre et le bloc cylindre (3) et une garniture d'étanchéité plate métallique, qui étanchéifit la fente ainsi qu'une surface frontale (8) d'une chemise de cylindre (6) qui s'étend dans la fente et qui présente une saillie (10) par rapport au bloc cylindre, caractérisé en ce que la garniture d'étanchéité plate comprend deux couches d'étanchéité (1, 2, 1', 2') avec des joncs (4, 4', 5, 5') entourant l'ouverture de la chemise de cylindre (6), lesdits joncs s'étendant radialement à l'extérieur de la chemise de cylindre (6) et étant supporté par la hauteur axiale de la saillie (10) de la chemise de cylindre (6) qui sert de butée pour les joncs, au moins une des deux couches d'étanchéité (1, 2, 1', 2') de la garniture d'étanchéité plate s'étendant sur la surface frontale de la chemise de cylindre définissant la saillie par rapport au bloc cylindre jusqu'à son diamètre interne, de telle sorte qu'à l'état monté, dans la zone de la surface frontale de la chemise de cylindre, on obtient un état de déformation accrue par rapport à la zone restante de la garniture d'étanchéité plate.

2. Moteur à combustion interne selon la revendication 1, caractérisé en ce que la hauteur axiale de la saillie (10) de la chemise de cylindre (6) est situé dans le domaine de 50 à 250 micromètres.

3. Moteur à combustion interne selon la revendication 1 et 2, caractérisé en ce que les joncs sont disposés de manière symétrique et une des deux couches d'étanchéité (2) correspond avec le bloc cylindre (3) et comprend une section périphérique (9) qui est coudée en fonction de la hauteur de la saillie (10) de la chemise de cylindre (6) et correspond avec la surface frontale (8).

4. Moteur à combustion interne selon la revendication 3, caractérisé en ce qu'une couche d'écartement (11) est disposée entre les couches d'étanchéité (1, 1',2,2').

5. Moteur à combustion interne selon la revendication 4, caractérisé en ce que la couche d'écartement (11) s'étend jusqu'à l'ouverture de la chemise de cylindre (6).

6. Moteur à combustion interne selon au moins une des revendications 4 et 5, caractérisé en ce que la zone d'extrémité de la couche d'écartement (11) qui s'étend jusqu'à l'ouverture de la chemise de cylindre (6) présente un coude.
